# EUROPÄISCHE PATENTANMELDUNG

(11) **EP 4 449 854 A1**
(43) Veröffentlichungstag der Anmeldung: **23.10.2024**
(21) Anmeldenummer: 23168981.1
(22) Anmeldetag: 20.04.2023
(51) Int. Cl.: A01D 78/12

(54) **HEUWERBUNGSMASCHINE MIT ABNEHMBAREM ZINKENTRÄGER**

(71) Anmelder: Kverneland Group Kerteminde AS, 5300 Kerteminde (DK)
(72) Erfinder: Salzer, Henning, 78244 Gottmadingen (DE); Gohl, Stefan, 78244 Gottmadingen (DE)
(74) Vertreter: Grünecker Patent- und Rechtsanwälte PartG mbB

(57) **Zusammenfassung**

Die Erfindung betrifft einen Zinkenträger für eine Heuwerbungsmaschine sowie eine Heuwerbungsmaschine, insbesondere Heuer oder Schwader, mit mindestens einem Rechenkreisel mit mehreren Zinkenträgern, wobei die Zinkenträger als mit Zinken bestücktes Rohr ausgebildet sind und eine Vorderöffnung zur Aufnahme einer Kreiselarmwelle aufweisen. Ein sich im Rohr länglich in Axialrichtung erstreckendes, nach innen vorspringendes Mitnehmerelement ist von der Vorderöffnung des Rohrs beabstandet und wird beim Aufschieben des Rohrs auf die Kreiselarmwelle in eine in der Kreiselarmwelle ausgebildete Mitnehmernut geschoben.

## Beschreibung

Die Erfindung betrifft einen Zinkenträger für eine Heuwerbungsmaschine gemäß dem Oberbegriff des Anspruchs 1 sowie eine Heuwerbungsmaschine mit einem solchen Zinkenträger gemäß Anspruch 5.

Heuwerbungsmaschinen mit Rechenkreiseln sind beispielsweise aus der DE102004036671 A1 bekannt oder aber aus der EP3357323 A1. Figur 8 zeigt beispielhaft eine aus dem Stand der Technik bekannte Heuwerbungsmaschine. Heuwerbungsmaschinen weisen mindestens einen Rechenkreisel auf, der einen Rotor mit mehreren um eine Rotorachse umlaufenden Kreiselarmwellen umfasst. An die Kreiselarmwellen sind sogenannte Zinkenträger gekoppelt. Dabei sind die Zinkenträger zumindest teilweise abnehmbar. Zinkenträger werden z.B. zum Straßentransport teilweise demontiert und in einer Parkstellung abgelegt. Die Kreiselarmwellen werden bei jeder Rotorarmdrehung über Steuerhebel in einer Kurvenbahn z.B. in eine Arbeitsphase und eine Aushebephase umgesteuert, d.h. die Zinkenpakete räumen das Material im vorderen Rotorsektor und legen es am Schwad ab. Die Drehzahl des Rotors beträgt z.B. ca. 1/s. Mit gleicher Frequenz werden also die Zinkenträger mit den Zinkenpaketen vor und zurück geschwenkt. Das heißt, über die lösbare Verbindung zwischen Zinkenträger und Kreiselarmwelle werden Massenträgheitsmomente und Zentripetalkräfte vom Zinkenträger übertragen, die bei erhöhter Drehzahl mit Potenzfunktion anwachsen. Die lösbar miteinander verbundenen Zinkenträger und Kreiselarmwellen sind somit einer großen mechanischen Belastung ausgesetzt. Die Rechenkreisel müssen allerdings jahrelang bei Millionen von Lastzyklen, bei Witterung und Schmutz eine einwandfreie Funktion gewährleisten.

Für die Kopplung von abnehmbaren Zinkenträgern gibt es bereits unterschiedliche Ausführungen, die allerdings kompliziert und aufwendig sind und deren einwandfreie Funktion nicht immer über einen langen Zeitraum gewährleistet werden kann. Zum Beispiel gibt es bereits Zinkenträger aus profilierten Rohren, die über ein Adapterrohr mit der Kreiselarmwelle verbunden werden. Problematisch bei dieser Lösung ist die Adaption der Kreiselarmwelle am Adapterrohr sowie die Axialsicherung zwischen den Rohren. Auch die Maßhaltigkeit der Profile ist problematisch.

Hiervon ausgehend liegt der vorliegenden Erfindung die Aufgabe zugrunde, einen Zinkenträger für eine Heuwerbungsmaschine, bzw. eine Heuwerbungsmaschine bereitzustellen, die eine einfache, stabile und maßhaltige Verbindung zwischen Zinkenträger und Kreiselarmwellen ermöglichen.

Erfindungsgemäß wird diese Aufgabe durch die Merkmale der Ansprüche 1 und 5 gelöst.

Gemäß der Erfindung ist ein Zinkenträger für eine Heuwerbungsmaschine vorgesehen, der abnehmbar an einer Kreiselarmwelle befestigbar ist. Der Zinkenträger ist in Form eines mit Zinken bestücktes Rohr ausgebildet und weist eine Vorderöffnung zur Aufnahme einer Kreiselarmwelle auf. Das heißt, dass das Rohr auf die Kreiselarmwelle aufschiebbar ist. Erfindungsgemäß ist im Rohr ein sich länglich in Axialrichtung erstreckendes, nach innen vorspringendes Mitnehmerelement angeordnet, das von der Vorderöffnung beabstandet ist. Dieses Mitnehmerelement wird beim Aufschieben des Rohrs des Zinkenträgers auf die Kreiselarmwelle in eine in der Kreiselarmwelle ausgebildete Mitnehmernut geschoben und kann eine formschlüssige Verbindung bilden.

Beim Einschieben des Mitnehmerelements in die Mitnehmernut kann eine formschlüssige Verbindung zwischen Mitnehmernut und Mitnehmerelement, insbesondere Mitnehmerstab, realisiert werden. Somit kann der Zinkenträger werkzeuglos an der Kreiselarmwelle befestigt werden. Durch die längliche Ausbildung des Mitnehmerelements ergibt sich eine stabile Verbindung. Durch Mitnehmerelement und Mitnehmernut kann eine Verbindung zwischen der jeweiligen Kreiselarmwelle und dem Zinkenträger realisiert werden um gleichzeitig den Zinkenträger in Umdrehung zu versetzten, also mitzunehmen.

Durch die erfindungsgemäße Lösung werden Torsions- und Biegemomente durch die formschlüssige stabile Verbindung im Wesentlichen spielfrei übertragen.

Vorteilhafterweise weist der Zinkenträger eine Querbohrung in dem Rohr zwischen der Vorderöffnung und dem Mitnehmerelement auf, um hier ein Axialsicherungselement einzuschieben, beispielsweise einen Axialsicherungsstift. Die Querbohrung erstreckt sich insbesondere durch das gesamte Rohr, d.h. es gibt auf gegenüberliegenden Seiten des Rohrs eine entsprechende Öffnung. In diesem Zusammenhang ist es besonders vorteilhaft, dass das Mitnehmerelement von der Vorderöffnung beabstandet ist, da dann in diesem Bereich die Querbohrung angeordnet werden kann.

Vorteilhafterweise ist das Mitnehmerelement in eine Öffnung des Rohrs eingefügt, insbesondere eingeschweißt oder eingeklebt. Dabei ragt ein Teil des Mitnehmerelements in das Rohr hinein und es kann auch ein anderer Teil des Mitnehmerelements von der Außenwandung des Rohrs nach außen vorstehen. Das Mitnehmerelement kann insbesondere eingeschweißt oder eingeklebt werden. Alternativ dazu kann das Mitnehmerelement auch in die Rohrwandung eingeprägt werden, derart, dass es nach innen vorspringt und kann insbesondere als längliche Sicke partiell in die Wandung des Rohrs eingepresst sein. Der erfindungsgemäße Zinkenträger kann also einfach gefertigt werden.

Das Mitnehmerelement kann aus Metall gebildet sein oder Baustahl, oder aber auch aus Kunststoff gefertigt werden.

Die erfindungsgemäße Heuwerbungsmaschine ist insbesondere ein Heuer oder Schwader mit mindestens einem Rechenkreisel mit mehreren Zinkenträgern nach mindestens einem der Ansprüche 1-4. Wie bereits im Zusammenhang mit dem Stand der Technik erläutert, müssen nicht alle Zinkenträger abnehmbar sein, es können aber alle Zinkenträger abnehmbar sein.

Der jeweilige Rechenkreisel umfasst einen Rotor mit mehreren um eine Rotorachse umlaufenden, insbesondere stabförmige Kreiselarmwellen, an die die abnehmbaren Zinkenträger gekoppelt sind. Die Kreiselarmwellen weisen am, dem Zinkenträger zugewandten Endbereich eine nach außen gewandte Mitnehmernut auf, die derart ausgebildet ist, dass beim Aufschieben des Rohrs d.h. des Zinkenträgers über die Kreiselarmwelle das Mitnehmerelement des Zinkenträgers in die Mitnehmernut geschoben wird. Das heißt, dass die Mitnehmernut an dem Zinkenträger zugewandten Ende der Kreiselarmwelle geöffnet ist. Somit kann auf einfache Art und Weise der Zinkenträger auf die Kreiselarmwelle aufgeschoben werden.

Dabei ist die Mitnehmernut nur im Endbereich der Kreiselarmwelle angeordnet und erstreckt sich nicht über die gesamte Kreiselarmwelle, sondern nur partiell, was zu einer zusätzlichen Stabilität führt.

Ferner umfasst gemäß einem bevorzugten Ausführungsbeispiel die Heuwerbungsmaschine eine Verriegelungseinrichtung, um die jeweiligen an die Kreiselarmwellen gekoppelten Zinkenträger in Axialrichtung zu verriegeln, d.h. um eine relative Bewegung in Axialrichtung von Zinkenträger und Kreiselarmwelle zu verhindern. Gemäß einem bevorzugten Ausführungsbeispiel weist dazu der jeweilige Zinkenträger eine Querbohrung in dem Rohr auf. Die Querbohrung ist dabei in dem Rohr zwischen der Vorderöffnung und dem Mitnehmerelement angeordnet. Die jeweilige Kreiselarmwelle weist eine entsprechende Querbohrung auf. So kann sich ein Axialsicherungselement, insbesondere ein Axialsicherungsstift durch die übereinanderliegenden Querbohrungen im Zinkenträger und der Kreiselarmwelle erstrecken. Die Querbohrung kann sich durch die ganze Kreiselarmwelle hindurch erstrecken.

Gemäß einer weiteren Ausführungsform kann die Querbohrung in der Kreiselarmwelle nicht wie zuvor beschrieben durchgehend sein, sondern einseitig, bis ins Innere, vorzugsweise bis zur Mitte der Kreiselarmwelle ausgeführt sein. Dabei ist die einseitige Querbohrung vorzugsweise an der Oberseite der Kreiselarmwelle angeordnet, d.h. an der Seite an der die Mitnehmernut, bzw. das Mitnehmerelement des Zinkenträgers ausgebildet ist.

Gemäß einem bevorzugten Ausführungsbeispiel ist die Querbohrung in der jeweiligen Kreiselarmwelle außerhalb der Mitnehmernut angeordnet. Dies ist besonders vorteilhaft, da die Kreiselarmwelle so nicht zusätzlich geschwächt wird.

Vorzugsweise ist der Abstand d zwischen der Querbohrung und der Mitnehmernut kleiner gleich 5 cm, d.h. die Mitnehmernut kann in direkter Nähe zum Aufwurf der Querbohrung angeordnet werden. Die Querbohrung kann also möglichst weit von der Kreiselarmlagerung und in unmittelbarer Nähe zur Mitnehmernut angeordnet werden, was die Stabilität der Verbindung erhöht.

Die Querbohrung ist gemäß einem bevorzugten Ausführungsbeispiel mindestens um einen Abstand e 3-10 cm von der Kreiselarmwellenlagerung entfernt, wobei die Kreiselarme insbesondere in den Öffnungen des Rotorgehäuses gelagert sind. Diese Beabstandung reduziert die Spannungen an der Kreiselarmwelle im Bereich der Querbohrung. Die kritische Stelle wird darüber hinaus vom Zinkenträger überbrückt.

Vorteilhafterweise ist die Mitnehmernut auf der Oberseite der jeweiligen Kreiselarmwelle angeordnet, wenn die Zinken der entsprechenden Kreiselarmwelle im Wesentlichen senkrecht zur Kreiselarmwelle nach unten stehen, wodurch die Biegezugbelastung wesentlich reduziert werden kann.

Die Kreiselarmwelle kann insbesondere aus induktionsgehärtetem Vergütungsstahl gefertigt sein, wobei der Zinkenträger aus kostengünstigerem Baustahl gefertigt sein kann.

Die Mitnehmernut erstreckt sich in Axialrichtung nur partiell über die Kreiselarmwelle und weist beispielsweise bevorzugt eine Länge m von 10-15 cm auf.

Vorteilhafterweise weist das Mitnehmerelement an seinem dem Rotor zugewandten Ende einen Endabschnitt auf, dessen Querschnittsfläche in Richtung Rotor abnimmt, d.h. sich insbesondere konisch verjüngt. Somit kann das Mitnehmerelement einfach in die Mitnehmernut eingefädelt werden, was das Handling vereinfacht.

Gemäß einer bevorzugen Ausführungsform wird das Zinkenträgerrohr bis zur Kreiselarmwellenlagerung aufgeschoben. Somit ergibt sich maximale Stabilität durch den Überlapp der Rohre. Außerdem ist diese Lösung optisch ansprechend, da es keine Übergangskante zwischen Zinkenträger und Kreiselarmwelle gibt.

Die Kreiselarmwelle kann gemäß einer weiteren Ausführungsform im Aufsteckbereich des Zinkenträgers, an der Rotor zugewandten Seite einen größeren Durchmesser aufweisen als an der abgewandten Seite und insbesondere
kann der Innendurchmesser des Rohrs an der dem Rotor zugewandten Vorderöffnung größer sein als der Durchmesser der Kreiselarmwelle an der dem Rotor abgewandten Seite.

Somit kann der Zinkenträger einfach aufgeschoben werden, da es nicht gleich am Anfang, wenn das Rohr des Zinkenträgers aufgeschoben wird, zu einem Passsitz kommt.

Jedenfalls sind die Durchmesser des jeweiligen Zinkenarmträgers und der Kreiselarmwelle derart gewählt, dass zumindest im Bereich des Mitnehmerelements und der Mitnehmernut, sowie der Querbohrung ein Passsitz des Rohrs auf der Kreiselarmwelle realisiert ist.

Die vorliegende Erfindung wird nachfolgend unter Bezugnahme der folgenden Figuren näher erläutert.
Figur 1 zeigt in perspektivischer Darstellung eine Ausführungsform einer Heuwerbungsmaschine 1 gemäß der vorliegenden Erfindung.
Figur 2 zeigt in perspektivischer Darstellung ein Rotorgehäuse mit einem an der Kreiselarmwelle 3 angeordneten Zinkenträger 2 gemäß einem Ausführungsbeispiel der vorliegenden Erfindung.
Figur 3 zeigt eine Explosionsdarstellung des Zinkenträgers und der Kreiselarmwelle gemäß einem Ausführungsbeispiel der vorliegenden Erfindung.
Figur 4a zeigt schematisch einen Längsschnitt durch den an der Kreiselarmwelle 3 befestigten Zinkenträger gemäß einem Ausführungsbeispiel der vorliegenden Erfindung.
Figur 4b zeigt einen Querschnitt entlang der Linie I-I in Figur 4a.

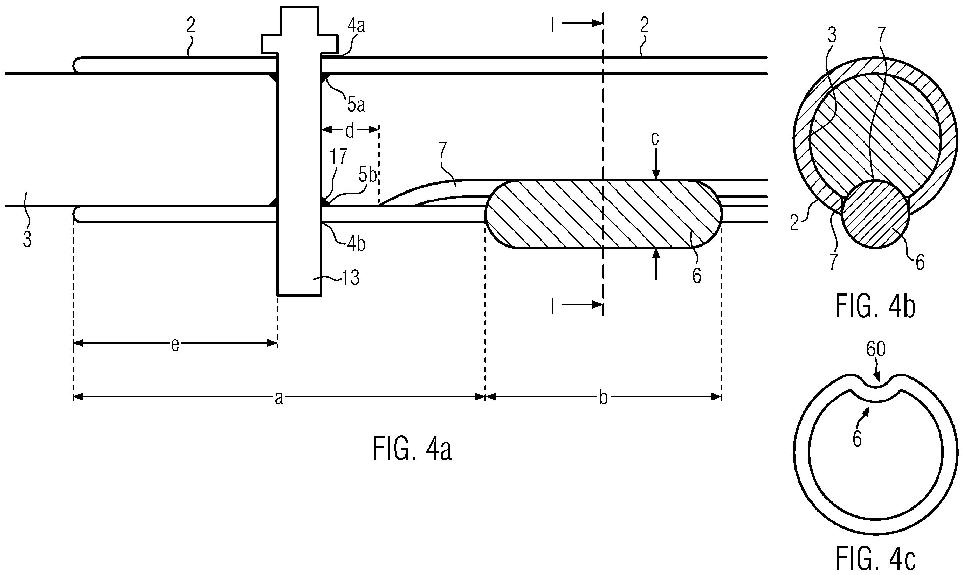

Figur 4 c zeigt eine weitere erfindungsgemäße Ausführungsform des Mitnehmerelements

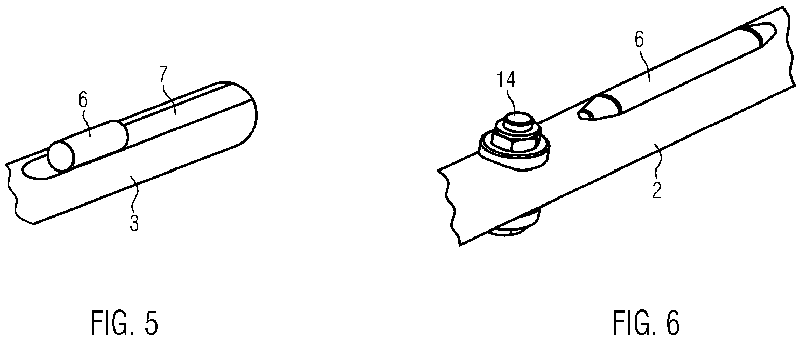

Figur 5 zeigt schematisch in perspektivischer Darstellung die Kreiselarmwelle 3 mit ausgeblendetem Zinkenträger 2 gemäß einem Ausführungsbeispiel der vorliegenden Erfindung.
Figur 6 zeigt in perspektivischer Darstellung einen Ausschnitt des an der Kreiselarmwelle 3 angeordneten Zinkenträgers 2 gemäß einem Ausführungsbeispiel der vorliegenden Erfindung.

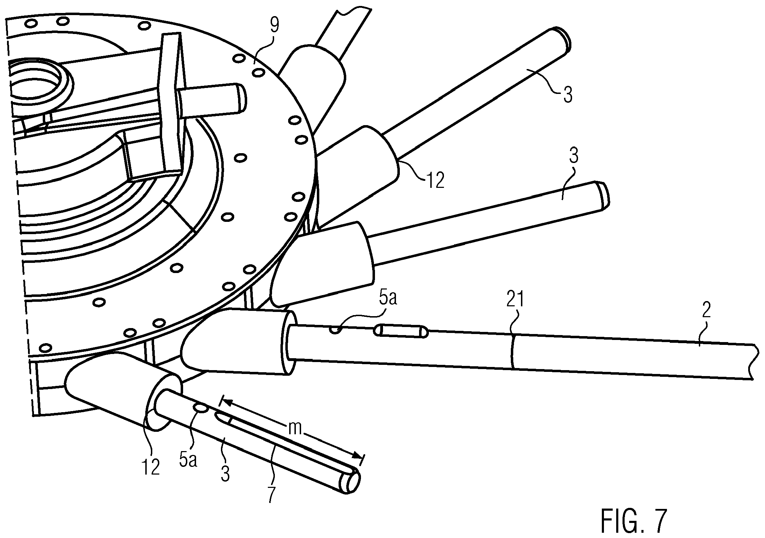

Figur 7 zeigt einen Ausschnitt der Heuwerbungsmaschine in perspektivischer Darstellung gemäß einem Ausführungsbeispiel der vorliegenden Erfindung.

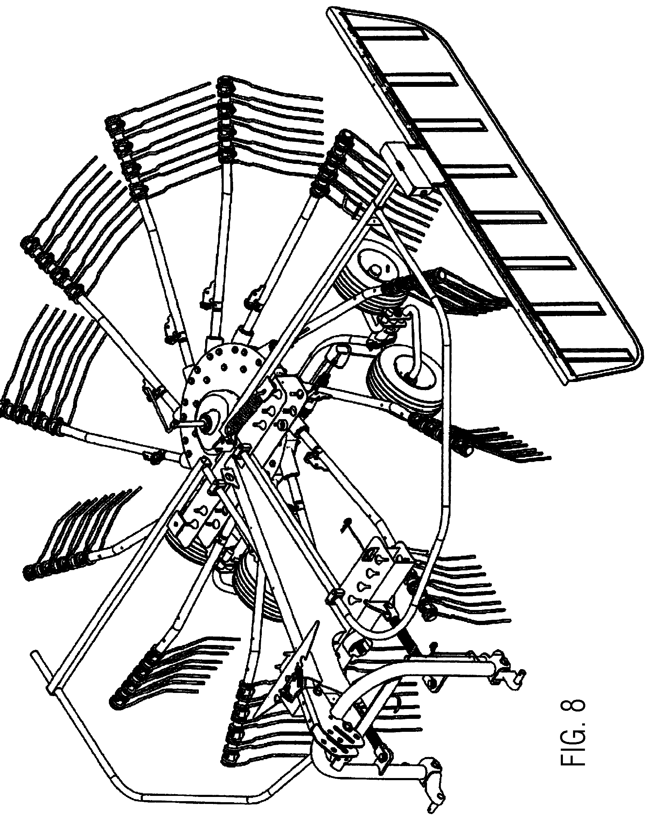

Fig. 8 zeigt perspektivisch eine aus dem Stand der Technik bekannte Heuwerbungsmaschine.

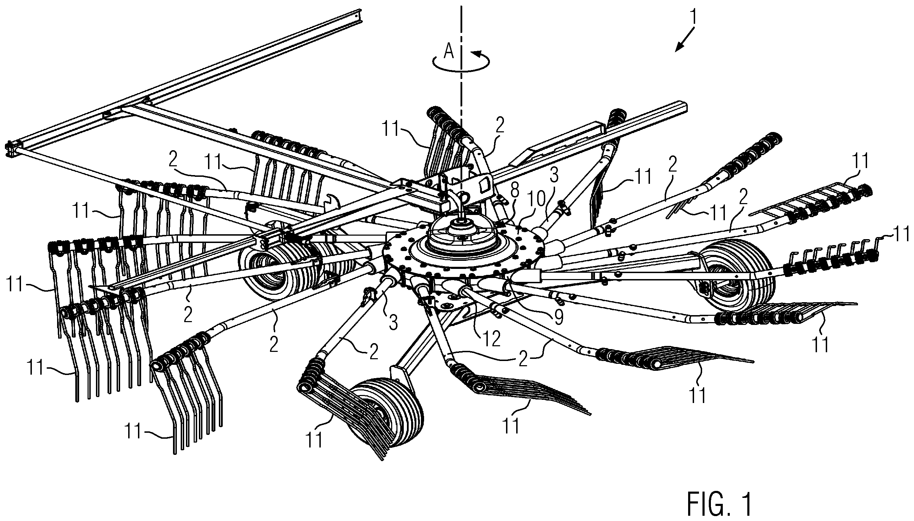

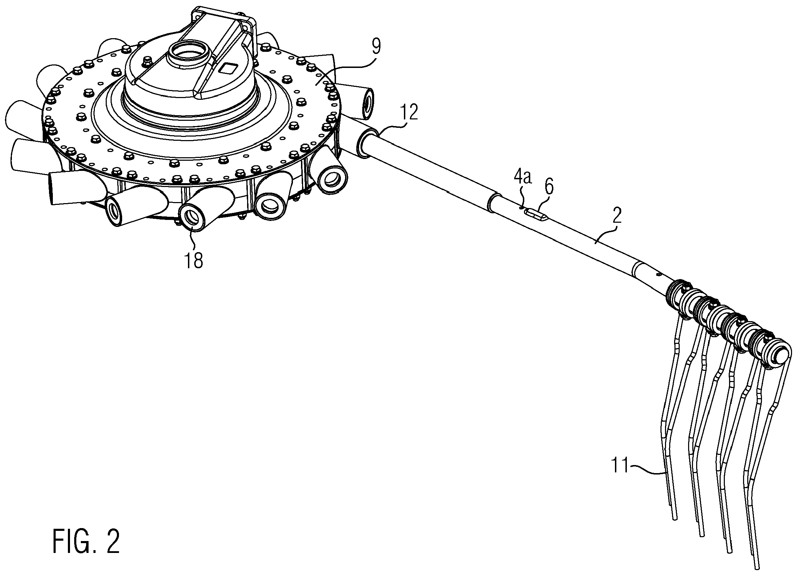

Figur 1 zeigt eine Heuwerbungsmaschine 1 in Form eines Schwaders mit einem Rechenkreisel, der an einem Tragarm befestigt ist. Der Rechenkreisel weist ein Rotorgehäuse 9 auf. Das Rotorgehäuse 9 ist drehbar um die Rotorachse A gelagert und wird in bekannter Weise von einem Getriebe, z.B. einem Kegelradgetriebe umlaufend angetrieben. In den Öffnungen 18 des Rotorgehäuses 9 (siehe auch Fig. 2) sind Kreiselarmwellen 3 gelagert und werden vom Rotorgehäuse 9 angetrieben. Hier sind die Öffnungen 18 in zylinderförmigen Lagerrohren des Gehäuses 9 angeordnet. An den Kreiselarmwellen 3 sind Zinkenträger 2 befestigt.

Bei dieser Ausführungsform sind ein Teil der Zinkenträger 2, hier z.B. vier, abnehmbar an der entsprechenden Kreiselarmwelle 3 befestigt, während die weiteren, hier z.B. zehn, Zinkenträger 2 fest mit der Kreiselarmwelle verbunden sind. Dies ist jedoch nur ein Beispiel. Es können auch alle Zinkenträger 2 abnehmbar befestigt werden. Fig. 2 zeigt einen auf die Kreiselarmwelle 3 aufgeschobenen Zinkenträger 2 im Detail.

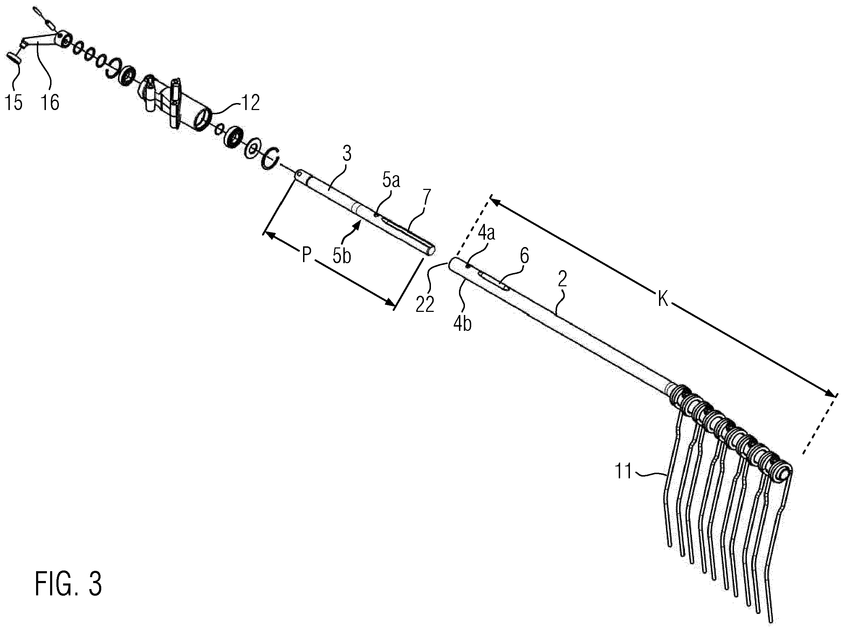

Figur 3 zeigt eine Explosionsdarstellung eines Zinkenträgers 2 und der Kreiselarmwelle 3 sowie des Rollenhebels 16. Der Zinkenträger 2 weist an seinem vom Rotorgehäuse 9 abgewandten Endbereich Zinken 11 auf. Wie nachfolgend näher erläutert, wird der Zinkenträger 2 an die Kreiselarmwelle 3 gekoppelt, die in der Lagerung 12 gelagert ist. Die Kreiselarmwelle 3 ist drehfest mit einem Hebel 16, insbesondere einem Rollenhebel 16, mit einer Rolle 15 verbunden, wobei das dem Zinken abgewandte Ende des Hebels 16, d.h., insbesondere die Rolle 15, in einer nicht dargestellten Kurvenbahn geführt wird, insbesondere die Rollen in der Kurvenbahn laufen. Der Schwenkwinkel der Kreiselarmwelle und somit der Schwenkwinkel der Zinken 11 kann während des Umlaufs der Kreiselarmwellen 3 um die Achse A entsprechend verändert werden.

Der Zinkenträger 2 ist als ein mit den Zinken 11 bestücktes, insbesondere hohlzylindrisches Rohr ausgebildet, das beispielsweise aus Baustahl gefertigt sein kann. Der Rohrdurchmesser kann beispielsweise in einem Bereich von 30-50mm und seine Länge k in einem Bereich von 700-1800mm liegen (Fig.3).

An seinem dem Rotor zugewandten Endbereich weist der Zinkenträger 2 ein sich länglich in Axialrichtung des Zinkenträgers erstreckendes, nach innen vorspringendes Mitnehmerelement 6 auf. Wie insbesondere aus den Figuren 4a, 4b hervorgeht, kann das Mitnehmerelement 6, das beispielsweise aus Metall, Baustahl oder Kunststoff gefertigt sein kann, in eine Öffnung in die Rohrwandung des Zinkenträgers 2 eingefügt, z.B. eingeklebt oder eingeschweißt sein. Es kann auch durch eine partielle Sicke (XX) im Zinkenträgerrohr erzeugt werden (Fig.4c), die entsprechend eingepresst wurde. Das Mitnehmerelement 6 weist beispielsweise eine Länge b in einem Bereich von 4-10 cm und eine Breite c im Bereich von 1-2 cm auf. Wesentlich ist, dass das Mitnehmerelement nach innen vorspringt, da bei diesem Ausführungsbeispiel das Mitnehmerelement 6 in eine Öffnung eingefügt ist, steht es auch nach außen von der Rohrwandung ab, wie insbesondere aus den Figuren 4a, 4b hervorgeht.

Der Abstand a von dem Mitnehmerelement 6 zum vorderen Ende, d.h., dem Rotor zugewandten Ende des Zinkenträgers liegt in einem Bereich von 50-100mm. Das Mitnehmerelement 6 kann derart ausgebildet sein, dass sich in einem dem Rotor zugewandten Endabschnitt die Querschnittsfläche insbesondere konisch verjüngt, was insbesondere auch aus Figur 6 hervorgeht. Der Zinkenträger weist weiter eine Querbohrung 4a, 4b, die sich durch die genüberliegenden Seiten des Rohrs erstreckt auf, wie insbesondere aus den Figuren 4a und 3 hervorgeht. Bei diesem Ausführungsbeispiel sind das Mitnehmerelement 6 auf der Oberseite des Rohrs des Zinkenträgers 2 angeordnet, wenn die Zinken im Wesentlichen senkrecht ausgerichtet sind und auch die Querbohrung erstreckt sich dann im Wesentlichen vertikal durch das Rohr. Dies ist allerdings nur ein bevorzugtes Ausführungsbeispiel.

Wie insbesondere aus der Figur 3 und der Figur 5 und 7 hervorgeht, weist die Kreiselarmwelle 3 am, dem Zinkenträger 2 zugewandten Endbereich eine nach außen gewandte Mitnehmernut 7 auf, die derart ausgebildet ist, dass beim Aufschieben des Rohrs des Zinkenträgers 2 über die Kreiselarmwelle 3 das Mitnehmerelement 6 des Zinkenträgers 2 in die Mitnehmernut 7 geschoben wird. Die Mitnehmernut 7 ist derart ausgebildet, dass die Mitnehmernut 7 und das Mitnehmerelement 6 in zusammengeschobenem Zustand eine formschlüssige Verbindung aufweisen. Die Mitnehmernut weist beispielsweise eine Länge m von 50-150mm auf (Fig. 7). Sie kann beispielsweise in eine stabförmige Kreiselarmwelle eingeprägt werden. Die Kreiselarmwelle weist eine Länge p in einem Bereich von 400-1500mm auf, wie aus Fig. 3 hervorgeht. Das bedeutet, dass die Mitnehmernut nur partiell in der Kreiselarmelle 3 angeordnet ist, was die Stabilität erhöht.

Figur 4b zeigt einen Querschnitt entlang der Linie I-I in Fig. 4a und zeigt das Mitnehmerelement 6 in dem Zinkenträger 2, der in der Mitnehmernut liegt.

Figur 5 zeigt zum besseren Verständnis die Kreiselarmwelle 3 mit dem in die Mitnehmernut 7 eingeschobenen Mitnehmerelement 6, wobei der Zinkenträger 2 ausgeblendet ist. Auch die Kreiselarmwelle 3 weist eine Querbohrung 5a, 5b (siehe z.B. Figur 4a) auf, die bei aufgeschobenem, Zinkenträger 2 exakt unter den Querbohrungen 4a, 4b des Zinkenträgers 2 liegen, um ein Axialsicherungselement, insbesondere einen Steckbolzen 13 aufzunehmen, der ein Verschieben des Zinkenträgers in Axialrichtung verhindert. Das Axialsicherungselement 13 kann über eine Fixiereinrichtung gesichert werden, beispielsweise verschraubt, wie in Figur 6 dargestellt ist, oder kann über eine Spange oder einen Federstecker gesichert werden. Das Axialsicherungselement 13, insbesondere der Stift 13 weist in diesem Ausführungsbeispiel an seinem oberen Ende einen größeren Querschnitt auf als der Bohrungsquerschnitt, derart, dass der Stift in der Bohrung gehalten wird. Die Verriegelungseinrichtung, die die Querbohrungen 4a,4b,5a,5b, und das Axialsicherungselement, insbesondere den Axialsicherungsstift 13 umfasst, ist nur eine bevorzugte Ausführungsform. Es können auch andere Verriegelungseinrichtungen, wie beispielsweise Schnappverbindungen etc. verwendet werden, die ein axiales Verschieben vom Zinkenträger 2 zur Kreiselarmwelle 3 verhindern.

Auch die Mitnehmernut 7 ist vorzugsweise an der Oberseite der Kreiselarmwelle 3 angeordnet, sodass die Biegezugbelastung wesentlich reduziert werden kann. Die Querbohrung 5a, 5b ist vorteilhafterweise außerhalb der Mitnehmernut 7 angeordnet, was insgesamt die Stabilität erhöhen kann, da die Bohrung in der Nut die Kreiselarmwelle schwächen würde. Jedoch ist die Querbohrung 5a, 5b in unmittelbarer Nähe zur Mitnehmernut 7 angeordnet, d.h. in direkter Nähe zum Innengrat 17 der Querbohrung, wobei der Abstand d (Fig. 4a) von Querbohrung 5a,5b zur Mitnehmernut 7 vorzugsweise in einem Bereich von 0-50mm liegt. Die Querbohrung 5a, 5b ist möglichst weit von der Kreiselarmlagerung 12 entfernt und in unmittelbarer Nähe zur Mitnehmernut 7 angeordnet. Dabei liegt der Abstand e von der Querbohrung 5a bis zur Kreiselarmwellenlagerung 12e z.B. in einem Bereich von 30-100mm (Fig. 4a).

Figur 7 zeigt einen Ausschnitt aus dem Rechenkreisel mit mehreren Kreiselarmwellen 3, wobei bei der ersten Kreiselarmwelle 3 von links betrachtet noch kein Zinkenträger 2 aufgeschoben ist. Bei der zweiten Kreiselarmwelle ist ein Zinkenträger 2 aufgeschoben. Dabei wird der Zinkenträger bis zur Lagerung 12 aufgeschoben. Dabei überlappen sich die Kreiselarmwelle 3 und der Zinkenträger bis zu dem Punkt 21, was für zusätzliche Stabilität sorgt. Bei den ersten zwei Kreiselarmwellen von links betrachtet, ist die Kreiselarmwelle derart ausgerichtet, dass die Mitnehmernut 7 und das Mitnehmerelement 6 an der Oberseite angeordnet sind.

Nach der zweiten Kreiselarmwelle 3 setzt dann die Drehbewegung der Kreiselarmwelle 3 ein, derart, dass auch der Zinkenträger mit seinen Zinken entsprechend verschwenkt wird.

Die Kreiselarmwelle 3 ist aus insbesondere induktionsgehärtetem Vergütungsstahl gefertigt. Das Mitnehmerelement kann aus Metall, Baustahl oder Kunststoff gefertigt sein.

Beim Abmontieren der Zinkenträger 2 kann erst die Verriegelungseinrichtung gelöst werden, hier insbesondere das Axialsicherungselement 13 aus den Querbohrungen 4a, 4b, 5a, 5b entfernt werden und auf einfache Art und Weise der Zinkenträger 2 von der Kreiselarmwelle 3 abgezogen werden.

Gemäß einer weiteren Ausführungsform kann, wenn auch nicht dargestellt, die Querbohrung in der Kreiselarmwelle 3 nicht wie zuvor beschrieben durchgehend sein, sondern einseitig, bis ins Innere, vorzugsweise bis zur Mitte der Kreiselarmwelle 3 ausgeführt sein. Dabei ist die einseitige Querbohrung vorzugsweise an der Oberseite der Kreiselarmwelle angeordnet, d.h. an der Seite an der die Mitnehmernut 7 bzw. das Mitnehmerelement 6 des Zinkenträgers 2 ausgebildet ist.

Die Kreiselarmwelle 3 kann gemäß einer weiteren Ausführungsform im Aufsteckbereich des Zinkenträgers, an der Rotor zugewandten Seite einen größeren Durchmesser aufweist, als an der abgewandten Seite und insbesondere
kann der Innendurchmesser der Rohrs 2 des Zinkenträgers an der dem Rotor zugewandten Vorderöffnung größer sein als der Durchmesser der Kreiselarmwelle 3 an der dem Rotor abgewandten Seite.

Somit kann der Zinkenträger 2 einfach aufgeschoben werden, da es nicht gleich am Anfang, wenn das Rohr 2 des Zinkenträgers aufgeschoben wird zu einem Passsitz kommt. Jedenfalls sind die Durchmesser des jeweiligen Zinkenarmträgers und der Kreiselarmwelle derart gewählt, dass zumindest im Bereich des Mitnehmerelements 6 und der Mitnehmernut 7 sowie der Querbohrung ein Passsitz des Rohrs 2 auf der Kreiselarmwelle realisiert ist.

Durch die erfindungsgemäße Lösung werden Torsions- und Biegemomente durch die formschlüssige stabile Verbindung mit geringem Spiel übertragen und die Zinkenträger sind vorzugsweise werkzeuglos abnehmbar.

## Patentansprüche

1. Zinkenträger (2) für eine Heuwerbungsmaschine (1), der abnehmbar an einer Kreiselarmwelle (3) befestigbar ist, und als ein mit Zinken (11) bestücktes Rohr (2) mit einer Vorderöffnung (22) zur Aufnahme einer Kreiselarmwelle (3) ausgebildet ist,
**dadurch gekennzeichnet, dass**
im Rohr (2) ein sich länglich in Axialrichtung erstreckendes, nach innen vorspringendes Mitnehmerelement (6) angeordnet ist, das von der Vorderöffnung (22) beabstandet ist und das beim Aufschieben des Rohrs (2) auf die Kreiselarmwelle (3) in eine in der Kreiselarmwelle (3) ausgebildete Mitnehmernut (7) geschoben werden kann.

2. Zinkenträger nach Anspruch 1, **dadurch gekennzeichnet, dass** der Zinkenträger (2) eine Querbohrung (4a, 4b) in dem Rohr (2) zwischen der Vorderöffnung (22) und dem Mitnehmerelement (6) aufweist zum Einschieben eines Axialsicherungselements (13).

3. Zinkenträger nach Anspruch 1 oder 2, **dadurch gekennzeichnet, dass** das Mitnehmerelement (6) in eine Öffnung in der Rohrwandung des Rohrs (2) eingefügt, insbesondere eingeschweißt oder eingeklebt ist, oder
in die Rohrwandung eingeprägt ist, insbesondere als längliche Sicke (60) partiell in die Wandung des Rohrs (2) eingepresst ist.

4. Zinkenträger (2) nach mindestens einem der Ansprüche 1-3, **dadurch gekennzeichnet, dass** das Mitnehmerelement (6) aus Metall, Baustahl oder Kunststoff gefertigt ist.

5. Heuwerbungsmaschine (1), insbesondere Heuer oder Schwader, mit mindestens einem Rechenkreisel mit mehreren Zinkenträgern (2) nach mindestens einem der Ansprüche 1-4, wobei der jeweilige Rechenkreisel weiter
einen Rotor (8) umfasst, mit mehreren um eine Rotorachse (A) umlaufenden, insbesondere stabförmigen Kreiselarmwellen (3) an die die Zinkenträger (2) gekoppelt sind und
die am, dem Zinkenträger (2) zugewandten Endbereich, eine nach außen gewandte Mitnehmernut (7) aufweisen, die derart ausgebildet ist, dass beim Aufschieben des Rohrs (2) über die Kreiselarmwelle (3) das Mitnehmerelement (6) des Zinkenträgers (2) in die Mitnehmernut (7) geschoben wird.

6. Heuwerbungsmaschine (1) nach Anspruch 5, **dadurch gekennzeichnet, dass** die Heuwerbungsmaschine (1) eine Verriegelungseinrichtung aufweist um die jeweiligen an die Kreiselarmwellen (3) gekoppelten Zinkenträger (2) in Axialrichtung zu verriegeln, wobei vorzugsweise
der jeweilige Zinkenträger (2) eine Querbohrung (4a, 4b) in dem Rohr (2) zwischen der Vorderöffnung und dem Mitnehmerelement (6) aufweist,
die jeweilige Kreiselarmwelle (3) eine entsprechende deckungsgleiche Querbohrung (5a, 5b) aufweist und
ein Axialsicherungselement, insbesondere ein Axialsicherungsstift sich durch die übereinanderliegenden Querbohrungen (4a, 4b) im Zinkenträger (2) und der Kreiselarmwelle (3) erstreckt.

7. Heuwerbungsmaschine (1) nach Anspruch 5 oder 6, **dadurch gekennzeichnet, dass** die Querbohrung (5a, 5b) in der jeweiligen Kreiselarmwelle (3) außerhalb der Mitnehmernut (7) angeordnet ist, wobei vorzugsweise der Abstand zwischen der Querbohrung (5a, 5b) und der Mitnehmernut (7) kleiner gleich 5 cm ist.

8. Heuwerbungsmaschine (1) nach mindestens einem der Ansprüche 5-7, **dadurch gekennzeichnet, dass** die Querbohrung (5a, 5b) mindestens 3-10 cm von der Kreiselarmwellenlagerung (12) entfernt ist.

9. Heuwerbungsmaschine (1) nach mindestens einem der Ansprüche 5-8, **dadurch gekennzeichnet, dass** die Kreiselarmwelle (3) aus insbesondere induktionsgehärteten Vergütungsstahl gefertigt ist und vorzugsweise der Zinkenträger (2) aus Baustahl gefertigt ist.

10. Heuwerbungsmaschine (1) nach mindestens einem der Ansprüche 5-9, **dadurch gekennzeichnet, dass** die Mitnehmernut (7) auf der Oberseite der jeweiligen Kreiselarmwelle (3) angeordnet ist, wenn die Zinken (11) der entsprechenden Kreiselarmwelle im Wesentlichen senkrecht zur Kreiselarmwelle nach unten stehen.

11. Heuwerbungsmaschine (1) nach mindestens einem der Ansprüche 5-10, **dadurch gekennzeichnet, dass** die Mitnehmernut (7) erstreckt sich in Axialrichtung nur partiell über die Kreiselarmwelle und weist vorzugsweise eine Länge von 5-15 cm auf.

12. Heuwerbungsmaschine (1) nach mindestens einem der Ansprüche 5-11, **dadurch gekennzeichnet, dass** Mitnehmerelemente (6) an seinem dem Rotor (8) zugewandten Ende einen Endabschnitt aufweist, dessen Querschnittsfläche in Richtung Rotor (8), insbesondere konisch abnimmt.

13. Heuwerbungsmaschine (1) nach mindestens einem der Ansprüche 5-12, **dadurch gekennzeichnet, dass** das Rohr des Zinkenträgers (2) bis zur Kreiselarmwellenlagerung (12) aufgeschoben wird.

14. Heuwerbungsmaschine (1) nach mindestens Anspruch 6, **dadurch gekennzeichnet, dass** die Querbohrung (4a, 5a, 4b, 5b) in der Kreiselarmwelle (3) nicht durchgehend, sondern einseitig, bis ins Innere vorzugsweise bis zur Mitte der Kreiselarmwelle (3) ausgeführt ist und sich vorzugsweise an der Oberseite der Kreiselarmwelle angeordnet ist an der die Mitnehmernut, bzw. das Mitnehmerelement (6) des Zinkenträgers (2) ausgebildet ist.

15. Heuwerbungsmaschine nach mindestens einem der Ansprüche 5 -14, **dadurch gekennzeichnet, dass**
die Kreiselarmwelle (3) im Aufsteckbereich des Zinkenträgers, an der Rotor zugewandten Seite einen größeren Durchmesser aufweist, als an der abgewandten Seite und insbesondere der Innendurchmesser des Rohrs (2) an der dem Rotor zugewandten Vorderöffnung (22) größer ist als der der Durchmesser der Kreiselarmwelle an der dem Rotor abgewandten Seite.

## Geänderte Patentansprüche

### Geänderte Patentansprüche gemäss Regel 137(2) EPÜ.

1. Zinkenträger (2) für eine Heuwerbungsmaschine (1), der abnehmbar an einer Kreiselarmwelle (3) befestigbar ist, und als ein mit Zinken (11) bestücktes Rohr (2) mit einer Vorderöffnung (22) zur Aufnahme einer Kreiselarmwelle (3) ausgebildet ist,
**dadurch gekennzeichnet, dass**
im Rohr (2) ein sich länglich in Axialrichtung erstreckendes, nach innen vorspringendes Mitnehmerelement (6) angeordnet ist, das von der Vorderöffnung (22) beabstandet ist und das beim Aufschieben des Rohrs (2) auf die Kreiselarmwelle (3) in eine in der Kreiselarmwelle (3) ausgebildete Mitnehmernut (7) geschoben werden kann.

2. Zinkenträger nach Anspruch 1, **dadurch gekennzeichnet, dass** der Zinkenträger (2) eine Querbohrung (4a, 4b) in dem Rohr (2) zwischen der Vorderöffnung (22) und dem Mitnehmerelement (6) aufweist zum Einschieben eines Axialsicherungselements (13).

3. Zinkenträger nach Anspruch 1 oder 2, **dadurch gekennzeichnet, dass** das Mitnehmerelement (6) in eine Öffnung in der Rohrwandung des Rohrs (2) eingefügt, insbesondere eingeschweißt oder eingeklebt ist, oder
in die Rohrwandung eingeprägt ist, insbesondere als längliche Sicke (60) partiell in die Wandung des Rohrs (2) eingepresst ist.

4. Zinkenträger (2) nach mindestens einem der Ansprüche 1-3, **dadurch gekennzeichnet, dass** das Mitnehmerelement (6) aus Metall, Baustahl oder Kunststoff gefertigt ist.

5. Heuwerbungsmaschine (1), insbesondere Heuer oder Schwader, mit mindestens einem Rechenkreisel mit mehreren Zinkenträgern (2) nach mindestens einem der Ansprüche 1-4, wobei der jeweilige Rechenkreisel weiter
einen Rotor (8) umfasst, mit mehreren um eine Rotorachse (A) umlaufenden, insbesondere stabförmigen Kreiselarmwellen (3) an die die Zinkenträger (2) gekoppelt sind und die am, dem Zinkenträger (2) zugewandten Endbereich, eine nach außen gewandte Mitnehmernut (7) aufweisen, die derart ausgebildet ist, dass beim Aufschieben des Rohrs (2) über die Kreiselarmwelle (3) das Mitnehmerelement (6) des Zinkenträgers (2) in die Mitnehmernut (7) geschoben wird.

6. Heuwerbungsmaschine (1) nach Anspruch 5, **dadurch gekennzeichnet, dass** die Heuwerbungsmaschine (1) eine Verriegelungseinrichtung aufweist um die jeweiligen an die Kreiselarmwellen (3) gekoppelten Zinkenträger (2) in Axialrichtung zu verriegeln, wobei vorzugsweise
der jeweilige Zinkenträger (2) eine Querbohrung (4a, 4b) in dem Rohr (2) zwischen der Vorderöffnung und dem Mitnehmerelement (6) aufweist,
die jeweilige Kreiselarmwelle (3) eine entsprechende deckungsgleiche Querbohrung (5a, 5b) aufweist und
ein Axialsicherungselement, insbesondere ein Axialsicherungsstift sich durch die übereinanderliegenden Querbohrungen (4a, 4b) im Zinkenträger (2) und der Kreiselarmwelle (3) erstreckt.

7. Heuwerbungsmaschine (1) nach Anspruch 5 oder 6, **dadurch gekennzeichnet, dass** die Querbohrung (5a, 5b) in der jeweiligen Kreiselarmwelle (3) außerhalb der Mitnehmernut (7) angeordnet ist, wobei vorzugsweise der Abstand zwischen der Querbohrung (5a, 5b) und der Mitnehmernut (7) kleiner gleich 5 cm ist.

8. Heuwerbungsmaschine (1) nach mindestens einem der Ansprüche 5-7, **dadurch gekennzeichnet, dass** die Querbohrung (5a, 5b) 3-10 cm von der Kreiselarmwellenlagerung (12) entfernt ist.

9. Heuwerbungsmaschine (1) nach mindestens einem der Ansprüche 5-8, **dadurch gekennzeichnet, dass** die Kreiselarmwelle (3) aus insbesondere induktionsgehärteten Vergütungsstahl gefertigt ist und vorzugsweise der Zinkenträger (2) aus Baustahl gefertigt ist.

10. Heuwerbungsmaschine (1) nach mindestens einem der Ansprüche 5-9, **dadurch gekennzeichnet, dass** die Mitnehmernut (7) auf der Oberseite der jeweiligen Kreiselarmwelle (3) angeordnet ist, wenn die Zinken (11) der entsprechenden Kreiselarmwelle im Wesentlichen senkrecht zur Kreiselarmwelle nach unten stehen.

11. Heuwerbungsmaschine (1) nach mindestens einem der Ansprüche 5-10, **dadurch gekennzeichnet, dass** die Mitnehmernut (7) erstreckt sich in Axialrichtung nur partiell über die Kreiselarmwelle und weist vorzugsweise eine Länge von 5-15 cm auf.

12. Heuwerbungsmaschine (1) nach mindestens einem der Ansprüche 5-11, **dadurch gekennzeichnet, dass** Mitnehmerelemente (6) an seinem dem Rotor (8) zugewandten Ende einen Endabschnitt aufweist, dessen Querschnittsfläche in Richtung Rotor (8), insbesondere konisch abnimmt.

13. Heuwerbungsmaschine (1) nach mindestens einem der Ansprüche 5-12, **dadurch gekennzeichnet, dass** das Rohr des Zinkenträgers (2) bis zur Kreiselarmwellenlagerung (12) aufgeschoben wird.

14. Heuwerbungsmaschine (1) nach mindestens Anspruch 6, **dadurch gekennzeichnet, dass** die Querbohrung (4a, 5a, 4b, 5b) in der Kreiselarmwelle (3) nicht durchgehend, sondern einseitig, bis ins Innere vorzugsweise bis zur Mitte der Kreiselarmwelle (3) ausgeführt ist und sich vorzugsweise an der Oberseite der Kreiselarmwelle angeordnet ist an der die Mitnehmernut, bzw. das Mitnehmerelement (6) des Zinkenträgers (2) ausgebildet ist.

15. Heuwerbungsmaschine nach mindestens einem der Ansprüche 5 -14, **dadurch gekennzeichnet, dass**
die Kreiselarmwelle (3) im Aufsteckbereich des Zinkenträgers, an der Rotor zugewandten Seite einen größeren Durchmesser aufweist, als an der abgewandten Seite und insbesondere der Innendurchmesser des Rohrs (2) an der dem Rotor zugewandten Vorderöffnung (22) größer ist als der der Durchmesser der Kreiselarmwelle an der dem Rotor abgewandten Seite.
